# EUROPÄISCHE PATENTSCHRIFT

(11) **EP 1 845 283 B1**
(45) Veröffentlichungstag und Bekanntmachung des Hinweises auf die Patenterteilung: **23.02.2011**
(21) Anmeldenummer: 07006764.0
(22) Anmeldetag: 31.03.2007
(51) Int. Cl.: F16F 15/123, F16F 15/134

(54) **Torsionsschwingungsdämpfer**
Torsion vibration damper
Amortisseur de vibrations de torsion

(30) Priorität: 12.04.2006 DE 102006017227
(43) Veröffentlichungstag der Anmeldung: 17.10.2007
(73) Patentinhaber: ZF Friedrichshafen AG, 88046 Friedrichshafen (DE)
(72) Erfinder: Wack, Erwin, 97464 Niederwerm (DE)

(56) Entgegenhaltungen:
- EP-A- 0 798 489
- DE-A1- 4 229 416
- DE-A1- 4 407 562
- DE-A1-102004 019 223
- US-A- 5 464 198

## Beschreibung

Die Erfindung betrifft einen Torsionsschwingungsdämpfer gemäß dem Oberbegriff des Anspruches 1.

Durch die gattungsbildende US 5,464,198 A, insbesondere Fig. 1 bis 4, ist ein Torsionsschwingungsdämpfer bekannt, der mit einem antriebsseitigen Übertragungselement und mit einem relativ hierzu gegen die Wirkung von Energiespeichern um einen Relativdrehwinkel auslenkbaren abtriebsseitigen Übertragungselement ausgebildet ist. Die Übertragungselemente verfügen jeweils über Aufnahmen für die Energiespeicher, von denen jeder über umfangsseitige Endwindungen an je einer umfangsseitigen Begrenzung der Aufnahmen abstützbar ist. Jede dieser Endwindungen ist an ihrer der jeweiligen umfangsseitigen Begrenzung zugeordneten Seite mit einem Anschliff versehen, der sich, beginnend an der freien Endwindungsspitze, über einen vorbestimmten Winkelbereich von näherungsweise 270° erstreckt. Eine der Endwindung in Umfangsrichtung benachbarte Folgewindung ist lediglich im unmittelbaren Erstreckungsbereich der Endwindungsspitze zur Abstützung derselben vorgesehen, während außerhalb dieses Erstreckungsbereiches zur Bildung eines Energiespeicher-Endwirkraumes eine erste räumliche Distanz gegenüber der Endwindung aufgebaut ist, die innerhalb eines auf den unmittelbaren Erstreckungsbereich der Endwindungsspitze folgenden, vorbestimmten Winkelbereiches einen Maximalwert annimmt. Dieser Maximalwert entspricht bei unbelastetem Zustand des Energiespeichers einer zweiten räumlichen Distanz, die in Umfangsrichtung zwischen je zwei Folgewindungen als Energiespeicher-Zwischenwirkraum vorgesehen ist.

Aufgrund der Gleichheit der beiden räumlichen Distanzen ergibt sich eine bestimmte Verformungseigenschaft für den jeweiligen Energiespeicher, die nicht immer vorteilhaft ist.

Aus der DE 42 29 416 A1 ist ein Torsionsschwingungsdämpfer mit antriebsseitigen Übertragungselementen und einem relativ hierzu gegen die Wirkung von Energiespeichern um einen Relativdrehwinkel auslenkbaren abtriebsseitigen Übertragungselement bekannt, wobei die Übertragungselemente Aufnahmebereiche für Energiespeicher aufweisen, von denen jeder über zumindest eine umfangsseitige Endwindung an je einer umfangsseitigen Begrenzung der Aufnahme abstützbar ist. Jede Endwindung ist an ihrer der Begrenzung zugeordneten Seite mit einem Anschliff versehen, der sich, beginnend an der freien Endwindungsspitze, über einen vorbestimmten Winkelbereich erstreckt, und die Anlagefläche der Endwindung an der jeweiligen umfangsseitigen Begrenzung vergrößert.

Aufgrund des Anschliffs ist die Endwindung insbesondere im unmittelbaren Erstreckungsbereich der Endwindungsspitze mit einem Restquerschnitt versehen, der, bezogen auf den Querschnitt der in Umfangsrichtung benachbarten Windung, nachfolgend kurz als Folgewindung bezeichnet, sich in einem Verhältnisbereich befinden kann, der kleiner als das 0,1-fache der Folgewindung ist, wobei sich der Anschliff, ausgehend von der Endwindungsspitze, durchaus über einen Winkelbereich von 300° bis 340° erstrecken kann, so dass die Endwindung über diesen Winkelbereich mit einem Restquerschnitt auskommen muss, der um ein Mehrfaches geringer ist als der Querschnitt der Folgewindungen.

Bedingt durch den geringen Restquerschnitt muss, wie sich aus Fig. 2 der Zeichnung der DE 42 29 416 A1 ergibt, die Endwindung entlang eines erheblichen Winkelbereiches an der benachbarten Folgewindung in Anlage verbleiben, da ansonsten bei Einleitung eines Drehmomentes mit einem Bruch der Endwindung gerechnet werden muss. Hierdurch steht bei unbelastetem Energiespeicher lediglich zwischen den Folgewindungen eine räumliche Distanz zur Verfügung, die bei Stauchungen des Energiespeichers unter Last als Enegiespeicher-Wirkraum nutzbar ist. Dem Torsionsschwingungsdämpfer geht dadurch Verformungsweg verloren, was sich insbesondere dann nachteilig auswirkt, wenn die Energiespeicher des Torsionsschwingungsdämpfers nicht nur in Umfangsrichtung kompakt ausgebildet sind, sondern darüber hinaus auch gemäß der DE 10 2004 019 223 A1 in Aufnahmebereichen angeordnet sind, die jeweils durch Ausnehmungen für je einen Energiespeicher ausgebildet sind. Bei einem derartigen Torsionsschwingungsdämpfer verfügt somit jeder Energiespeicher über je zwei mit Anschliff versehene Endwindungen.

Der Erfindung liegt die Aufgabe zugrunde, einen Torsionsschwingungsdämpfer so auszubilden, dass dessen Verformungseigenschaften an unterschiedliche Bedingungen anpassbar sind, und die Ausführung von Endwindungen mit je einem Anschliff nicht mit einem Verlust an Verformungsweg einher geht.

Diese Aufgabe wird erfindungsgemäß durch die im unabhängigen Anspruch 1 angegebenen Merkmale gelöst.

Ausgangssituation für die vorliegende Erfindung ist, dass sich die Endwindung an der in Umfangsrichtung benachbarten Windung, nachfolgend kurz als Folgewindung bezeichnet, lediglich im unmittelbaren Erstreckungsbereich der Endwindungsspitze abstützt. Außerhalb dieses unmittelbaren Erstreckungsbereiches der Endwindungsspitze baut die Folgewindung zur Bildung eines Energiespeicher-Endwirkraumes eine erste räumliche Distanz a gegenüber der Endwindung auf, wobei diese erste räumliche Distanz a innerhalb eines auf den unmittelbaren Erstreckungsbereich der Endwindungsspitze folgenden, vorbestimmten Winkelbereiches ϕ einen Maximalwert annimmt, der bei unbelastetem Zustand des Energiespeichers zumindest im wesentlichen einer zweiten räumlichen Distanz b zwischen je zwei Folgewindungen entspricht, wobei durch die zweite räumliche Distanz b jeweils ein Energiespeicher-Zwischenwirkraum zwischen jeweils zwei einander benachbarten Folgewindungen des Energiespeichers entsteht.

Die erfindungsgemäße Ausgestaltung der Energiespeicher wird bei vorgekrümmten Energiespeichern angewendet. Bei Vorkrümmung der Energiespeicher um eine Drehachse ist die Endwindungsspitze zumindest im wesentlichen am radial inneren Ende der jeweiligen Endwindung vorgesehen, während die den Energiespeicher-Endwirkraum bildende erste räumliche Distanz a zumindest im wesentlichen am radial äußeren Ende der jeweiligen Endwindung und die den Energiespeicher-Zwischenwirkraum bildende zweite räumliche Distanz b zumindest im wesentlichen am radial äußeren Ende der zur Endwindung benachbarten Folgewindung vorgesehen ist.

Die Erfindung ist nachfolgend anhand eines Ausführungsbeispieles behandelt. Es zeigt:
- Fig. 1: die obere Hälfte eines Längsschnittes durch eine hydrodynamische Kopplungsanordnung mit einem Torsionsschwingungsdämpfer mit Energiespeichern;
- Fig. 2: einen Ausschnitt einer Draufsicht auf den Torsionsschwingungsdämpfer mit Blickrichtung A in Fig. 1 mit einem Energiespeicher, der über umfangsseitige Endwindungen verfügt, an welche sich in Umfangsrichtung eine jeweils benachbarte Folgewindung anschließt;
- Fig. 3: eine Herauszeichnung des Energiespeichers der Fig. 2;
- Fig. 4: eine Ansicht des Energiespeichers aus der Blickrichtung B in Fig. 3;
- Fig. 5: eine Schnittdarstellung gemäß der Schnittlinie C - C in Fig. 4.

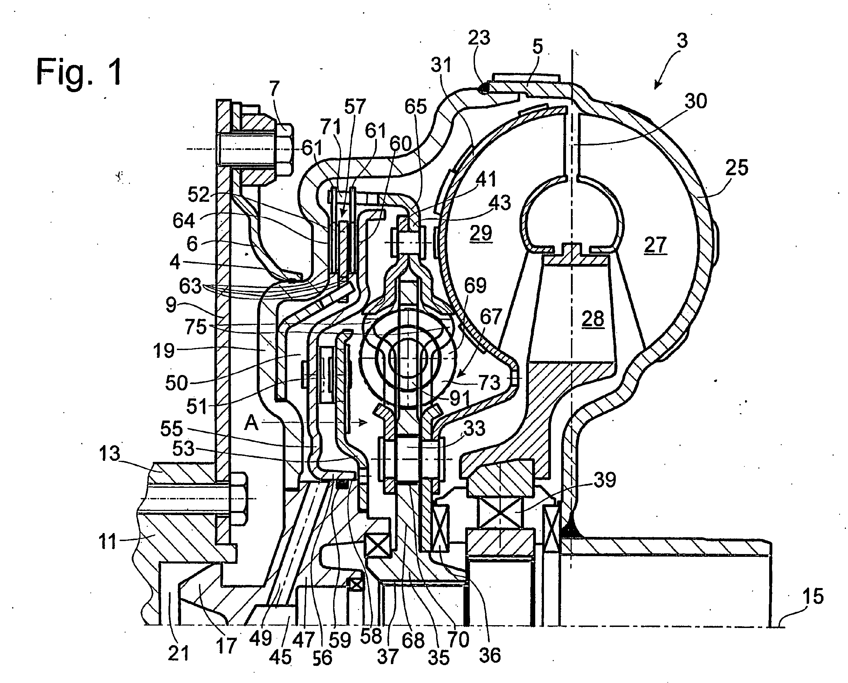

Die in Fig. 1 gezeigte hydrodynamische Kopplungsvorrichtung 3 weist ein Kupplungsgehäuse 5 auf, an welchem mittels einer Schweißnaht 4 eine Anbindungsplatte 6 befestigt ist, die über eine Mehrzahl von Aufnahmeelementen 7 und ein Kopplungselement 9, wie z. B. eine Flexplatte, mit einem Antrieb 11, beispielsweise der Kurbelwelle 13 einer Brennkraftmaschine, zur gemeinsamen Drehung gekoppelt werden kann.

Die Kopplungsvorrichtung 3 weist weiterhin im Bereich einer Drehachse 15 einen Lagerzapfen 1 7 auf, der an einem Deckel 19 des Gehäuses 5 vorgesehen und in einer am Antrieb 11 vorgesehenen Zentrierführung 21 aufgenommen ist.

Der Deckel 19 ist über eine Schweißnaht 23 mit einer Pumpenradschale 25 eines Pumpenrades 27 fest verbunden, das unter Bildung eines hydrodynamischen Kreises 30 mit einem Turbinenrad 29 sowie mit einem Leitrad 28 zusammenwirkt. Das Turbinenrad 29 verfügt über eine Turbinenradschale 31, die gegenüber einer Turbinennabe 35 zentriert ist, die über eine Axiallagerung 36 an einem Freilauf 39 des Leitrades 28 in Anlage kommt. Die Turbinennabe 35 steht über eine Verzahnung 37 mit einer radial innerhalb der Turbinennabe angeordneten, nicht gezeigten Getriebeeingangswelle in Drehverbindung. Üblicherweise sind derartige Getriebeeingangswellen mit einer Mittenbohrung ausgebildet, die in einen Übergangsraum 45 mündet, der mittels Durchgangsöffnungen 49 in einer Gehäusenabe 47 mit einer Druckkammer 50 verbunden ist, die axial zwischen dem Deckel 19 und einem Kolben 55 der Überbrückungskupplung 57 vorgesehen ist. Dem Kolben 55 ist ein Kolbenträger 53 zugeordnet, der mittels Tangentialblattfedern 51 zur Herstellung einer drehfesten Verbindung zwischen Kolben 55 und Deckel 19 der Gehäusenabe 47 befestigt ist.

Der Kolben 55 ist mit einem radial innen angeformten Kolbenfuß 56 an einer Aufnahme 58 der Gehäusenabe 47 mittels einer Abdichtung 59 dichtend aufgenommen und kommt in seinem radial äußeren Bereich mit einer Reibfläche 60 an einem Reibbelag 63 einer Lamelle 61 zur Anlage, wobei diese Lamelle 61 sich mittels eines weiteren Reibbelages 63, einer Zwischenlamelle 52 und einer weiteren Lamelle 61 mit beidseitigen Reibbelägen 63 an einer Reibfläche 64 des Deckels 19 abzustützen vermag. Die Lamellen 61 sind jeweils mit einer Verzahnung 71 eines antriebsseitigen Übertragungselementes 65 eines Torsionsschwingungsdämpfers 67 in drehfester Verbindung, wobei dieses antriebsseitige Übertragungselement 65, gebildet durch Deckbleche 41 und 43, über eine Vernietung 33 an der Turbinenradschale 31 befestigt ist. Das antriebsseitige Übertragungselement 65 stützt sich über einen Umfangsfedersatz 69 an einem abtriebsseitigen Übertragungselement 68 des Torsionsschwingungsdämpfers 67, in der konkreten Ausführung gebildet durch die Turbinennabe 35, ab. Eine Begrenzung der Relativdrehauslenkweite zwischen antriebsseitigem Übertragungselement 65 und abtriebsseitigem Übertragungselement 68 erfolgt durch die Vernietung 33, die mit vorbestimmtem Umfangsspiel in zugeordnete Aussparungen 70 eingreift.

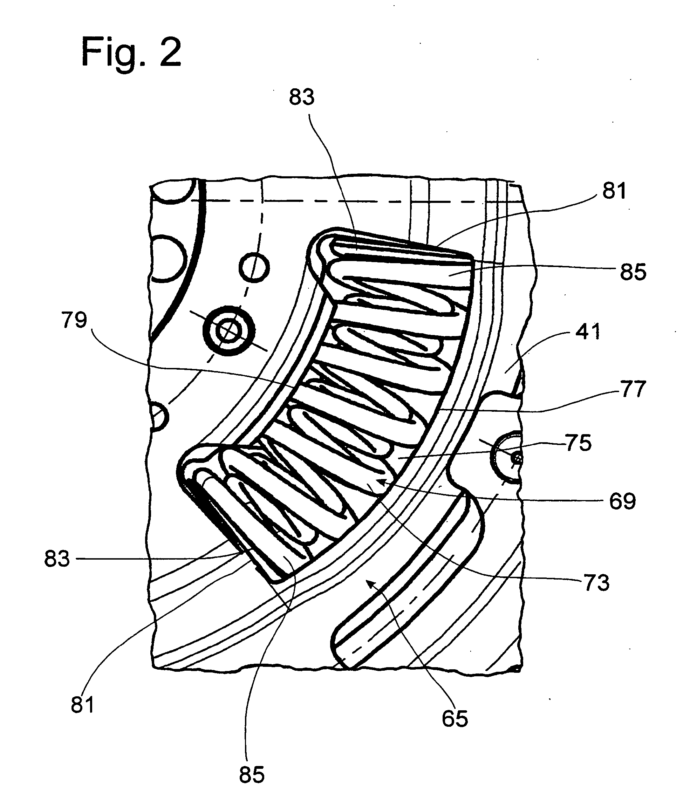

Fig. 2 zeigt das dem Kolben 55 der Überbrückungskupplung 57 zugewandte Deckblech 41 des antriebseitigen Übertragungselementes 65 des Torsionsschwingungsdämpfers 67, wobei in als Ausnehmungen ausgebildeten Aufnahmen 75 des Deckbleches 41 Energiespeicher 73 des Umfangsfedersatzes 69 ebenso wie auch in dem dem Turbinenrad 29 zugewandten Deckblech 43 enthalten sind. Jeder in den Ausnehmungen 75 aufgenommene Energiespeicher 73 steht außerdem in Wirkverbindung mit am abtriebsseitigen Übertragungselement 68, mithin also an der Turbinennabe 35 vorgesehenen, sich nach radial außen erstreckenden Ansteuerelementen 91 (Fig. 1).

Wie Fig. 2 deutlich entnommen werden kann, besteht jede Ausnehmung 75 aus einer radialen Außenseite 77 sowie einer radialen Innenseite 79, durch welche jeweils zwei umfangsseitige Begrenzungen 81 miteinander verbunden sind. Der jeweils in der Ausnehmung 75 angeordnete Energiespeicher 73 verfügt über umfangsseitige Endwindungen 83, von denen jede jeweils einer umfangsseitigen Begrenzung 81 der Ausnehmung 75 zugewandt ist, sowie über eine Mehrzahl umfangsseitig mittlerer Windungen, nachfolgend als Folgewindung 85 bezeichnet, jeweils vorgesehen zwischen den beiden umfangsseitigen Endwindungen 83.

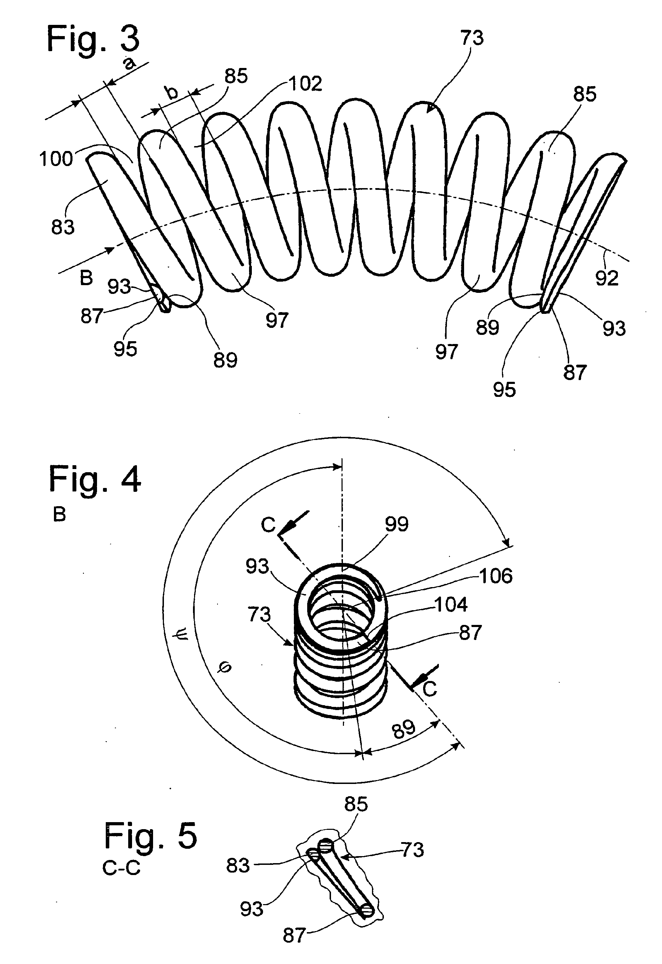

In Fig. 2 ist der Zustand der Energiespeicher 73 innerhalb ihrer Ausnehmung 75 bei Drehauslenkungsfreiheit zwischen den beiden Übertragungselementen 65 und 68 des Torsionsschwingungsdämpfers 67 dargestellt. Die einzelnen Energiespeicher 73 verfügen über eine Vorkrümmung gegenüber der Drehachse 15 (Fig. 1) und sind ohne Vorspannung in die jeweilige Ausnehmung 75 eingesetzt. Die Vorkrümmung ist am besten aus Fig. 3 erkennbar, wobei die Energiespeicher 73 eine ihrer Krümmung entsprechende Energiespeicher-Mittellinie 92 aufweisen.

Wie insbesondere aus den Fig. 3 bis 5 ersichtlich ist, sind die Endwindungen 83 jedes Energiespeichers 73 an ihren jeweils zur Anlage an den umfangsseitigen Begrenzungen 81 (Fig. 2) vorgesehenen Seiten mit jeweils einem Anschliff 93 versehen, so dass sich gegenüber der zugeordneten Begrenzung 81 eine zumindest im wesentlichen ebenflächige Auflage ergibt. Dieser Anschliff 93 erstreckt sich innerhalb eines Winkelbereiches ψ, der mit Vorzug 280° bis 320° beträgt.

Bedingt durch diesen Anschliff 93 ist die Endwindung 83 insbesondere in einem Erstreckungsbereich 89 ihrer Endwindungsspitze 87 mit einem Restquerschnitt 95 ausgebildet, der gegenüber den Querschnitten 97 der Folgewindungen 85 relativ gering ist, und mit Vorzug innerhalb eines Querschnitts-Verhältnisbereiches von 0,1 bis 0,4 verbleibt, mit besonderem Vorzug innerhalb eines Querschnitts-Verhältnisbereiches von 0,2 bis 0,3. Innerhalb des Erstreckungsbereiches 89 stützt sich die Endwindung 83, insbesondere hierbei die Endwindungsspitze 87, bei Einleitung eines Drehmomentes über jeweils eine der umfangsseitigen Begrenzungen 81 oder über jeweils eines der Ansteuerelemente 91, an der benachbarten Folgewindung 85 ab, und vermag somit auch größere Drehmomente schadensfrei zu übertragen.

Winkelmäßig im Anschluss an den Erstreckungsbereich 89 verläuft ein vorbestimmter Winkelbereich ϕ (Fig. 4), innerhalb dessen der Querschnitts-Verhältnisbereich der Endwindungen 83 bei unbelastetem Zustand des Energiespeichers 73 gegenüber der jeweils benachbarten Folgewindung 85 sehr rasch auf 0,6 bis 1,0 anwächst, mit besonderem Vorzug auf 0,8. Hierdurch wird die notwendige Stabilität der Endwindung 83 zur Übertragung eines eingeleiteten Drehmomentes geschaffen, während aufgrund eines raschen Entfernens der Folgewindung 85 von der Endwindung 83 mit zunehmendem Winkelabstand vom Erstreckungsbereich 89 ein Abstand gebildet wird, der als Verformungsweg für den Energiespeicher 73 bei Einleitung eines Drehmomentes über jeweils eine der umfangsseitigen Begrenzungen 81 oder über jeweils eines der Ansteuerelemente 91 zur Verfügung steht. Dieser Abstand nimmt zumindest im wesentlichen an einer Stelle des größten Winkelabstandes 99 des Winkelbereiches ϕ vom Erstreckungsbereich 89 der Endwindungsspitze 87, mit Vorzug bei zumindest im wesentlichen 180°, einen Maximalwert an, und schafft so eine räumliche Distanz a und dadurch einen Energiespeicher-Endwirkraum 100. Verglichen mit einer Distanz b zur Schaffung eines Energiespeicher-Zwischenwirkraumes 102 zwischen jeweils zwei Folgewindungen 85 ergibt sich mit Vorzug ein Wirkraum-Verhältnisbereich von 0,8 bis 1,0 des Energiespeicher-Endwirkraumes 100 gegenüber dem Energiespeicher-Zwischenwirkraum 102.

Bei Vorkrümmung des Energiespeichers 73 gemäß Fig. 3 liegen die Distanzen a und b und damit die Energiespeicher-Wirkräume 100 und 102 mit Vorzug radial außen, die Endwindungsspitze 87 dagegen mit Vorzug radial innen. Die Stelle des größten Winkelabstandes 99 des vorbestimmten Winkelbereiches ϕ liegt dadurch, wie in Fig. 4 erkennbar, zumindest im wesentlichen am radial äußeren Ende, ein freies Ende 104 der Endwindungsspitze 104 radial innerhalb der Energiespeicher-Mittellinie 92, und ein Übergang 106 des Anschliffs 93 gegenüber einem vom Anschliff 93 freien Bereich der Endwindung 83 radial außerhalb der Energiespeicher-Mittellinie 92.

Durch die zuvor beschriebene Ausgestaltung des Energiespeichers 73 gewinnt dieser an jeder seiner beiden umfangsseitigen Enden jeweils die Distanz a und damit jeweils den Energiespeicher-Wirkraum 100 als zusätzlichen Verformungsweg gegenüber einer Ausgestaltung, wie sie aus dem Stand der Technik bekannt ist.

### Bezugszeichenliste

- 3.: hydrodyn. Kopplungsvorrichtung
- 4.: Schweißnaht
- 5.: Kupplungsgehäuse
- 6.: Anbindungsplatte
- 7.: Aufnahmeelemente
- 9.: Kopplungselement
- 11.: Antrieb
- 13.: Kurbelwelle
- 15.: Drehachse
- 17.: Lagerzapfen
- 19.: Deckel
- 21.: Zentrierführung
- 23.: Schweißnaht
- 25.: Pumpenradschale
- 27.: Pumpenrad
- 28.: Leitrad
- 29.: Turbinenrad
- 30.: hydrod. Kreis
- 31.: Turbinenradschale
- 33.: Vernietung
- 35.: Turbinennabe
- 36.: Axiallagerung
- 37.: Verzahnung
- 39.: Freilauf
- 41.: Deckblech
- 43.: Deckblech
- 45.: Übergangsraum
- 47.: Gehäusenabe
- 49.: Durchgangsöffnungen
- 50.: Druckkammer
- 51.: Tangentialblattfedern
- 52.: Zwischenlamelle
- 53.: Kolbenträger
- 55.: Kolben
- 56.: Kolbenfuß
- 57.: Überbrückungskupplung
- 58.: Aufnahme
- 59.: Abdichtung
- 60.: Reibfläche
- 61.: Lamelle
- 63.: Reibbelag
- 64.: Reibfläche
- 65.: antriebsseitiges Übertragungselement
- 67.: Torsionsschwingungsdämpfer
- 68.: abtriebsseitiges Übertragungselement
- 69.: Umfangsfedersatz
- 70.: Aussparungen
- 71.: Verzahnung
- 73.: Energiespeicher
- 75.: Aufnahme
- 77.: radiale Außenseite
- 79.: radiale Innenseite
- 81.: umfangsseitige Begrenzung
- 83.: umfangsseitige Endwindung
- 85.: Folgewindung
- 87.: Endwindungsspitze
- 89.: Erstreckungsbereich
- 91.: Ansteuerelemente
- 92.: Energiespeicher-Mittellinie
- 93.: Anschliff
- 95.: Restquerschnitt
- 97.: Querschnitt
- 99.: größter Winkelabstand
- 100.: Energiespeicher-Endwirkraum
- 102: Energiespeicher-Zwischenwirkraum
- 104: freies Ende der Endwindungsspitze
- 104: Übergang des Anschliffs

## Patentansprüche

1. Torsionsschwingungsdämpfer (67) mit wenigstens einem antriebsseitigen Übertragungselement (65) und zumindest einem relativ hierzu gegen die Wirkung von Energiespeichern (73) um einen Relativdrehwinkel auslenkbaren abtriebsseitigen Übertragungselement (68), wobei die Übertragungselemente (65, 68) Aufnahmen (75) für die Energiespeicher (73) aufweisen, von denen jeder über zumindest eine umfangsseitige Endwindung (83) an je einer umfangsseitigen Begrenzung (83) der Aufnahmen (75) abstützbar ist, und jede Endwindung (83) wenigstens an ihrer der Begrenzung (83) zugeordneten Seite mit einem Anschliff (93) versehen ist, der sich, beginnend an der freien Endwindungsspitze (87), über einen vorbestimmten Winkelbereich (ψ) erstreckt, wobei eine der Endwindung (83) in Umfangsrichtung benachbarte Folgewindung (85) lediglich im unmittelbaren Erstreckungsbereich (89) der Endwindungsspitze (87) zur Abstützung derselben vorgesehen ist, außerhalb dieses Erstreckungsbereiches (89) dagegen zur Bildung eines Energiespeicher-Endwirkraumes (100) eine erste räumliche Distanz (a) gegenüber der Endwindung (83) aufbaut, wobei diese erste räumliche Distanz (a) innerhalb eines auf den unmittelbaren Erstreckungsbereich (89) der Endwindungsspitze (87) folgenden, vorbestimmten Winkelbereiches (ϕ) einen Maximalwert annimmt, der bei unbelastetem Zustand des Energiespeichers (73) einer zweiten räumlichen Distanz (b) entspricht, die in Umfangsrichtung zwischen je zwei Folgewindungen (85) als Energiespeicher-Zwischenwirkraum (102) vorgesehen ist, wobei der Energiespeicher-Endwirkraum (100) bei unbelastetem Zustand des Energiespeichers (73) innerhalb eines Wirkraum-Verhältnisbereiches von 0,7 bis 1,1 gegenüber dem Energiespeicher-Zwischenwirkraum (102) angesiedelt ist,
**dadurch gekennzeichnet,**
**dass** bei Vorkrümmung des Energiespeichers (73) um eine Drehachse (15) die Endwindungsspitze (87) zumindest im wesentlichen radial innerhalb einer Energiespeicher-Mittellinie (92) vorgesehen ist, während die den Energiespeicher-Endwirkraum (100) bildende erste räumliche Distanz (a) zumindest im wesentlichen am radial äußeren Ende oder jeweiligen Endwindung (83) und die den Energiespeicher-Zwischenwirkraum(102) bildende zweite räumliche Distanz (b) zumindest im wesentlichen am radial äußeren Ende einer zur Endwindung (83) benachbarten Folgewindung (85) vorgesehen ist.

## Claims

1. Torsional vibration damper (67), with at least one drive-side transmission element (65) and at least one output-side transmission element (68) deflectable in relation to the latter by an angle of relative rotation counter to the action of energy accumulators (73), the transmission elements (65, 68) having receptacles (75) for the energy accumulators (73), each of which can be supported via at least one circumferential end turn (83) in each case on a circumferential boundary (83) of the receptacles (75), and each end turn (83) being provided, at least on its side assigned to the boundary (83), with a ground-down portion (93) which, commencing at the free end-turn tip (87), extends over a predetermined angular range (ψ), a following turn (85) adjacent to the end turn (83) in the circumferential direction being provided only in the immediate region of extent (89) of the end-turn tip (87) for supporting the latter, but, outside this region of extent (89), setting up a first spatial distance (a) with respect to the end turn (83) in order to form an energy-accumulator final active space (100), this first spatial distance (a) assuming, within a predetermined angular range (ϕ), following the immediate region of extent (89) of the end-turn tip (87), a maximum value which, in a non-loaded state of the energy accumulator (73), corresponds to a second spatial distance (b) which is provided in the circumferential direction in each case between two following turns (85) as an energy-accumulator intermediate active space (102), in the non-loaded state of the energy accumulator (73) the energy-accumulator final active space (100) being established within an active-space ratio range of 0.7 to 1.1 with respect to the energy-accumulator intermediate active space (102), **characterized in that**, during the pre-curvature of the energy accumulator (73) about an axis of rotation (15), the end-turn tip (87) is provided at least essentially radially within an energy-accumulator centre line (92), while the first spatial distance (a) forming the energy-accumulator final active space (100) is provided at least essentially at the radially outer end of the respective end turn (83), and the second spatial distance (b) forming the energy-accumulator intermediate active space (102) is provided at least essentially at the radially outer end of a following turn (85) adjacent to the end turn (83).

## Revendications

1. Amortisseur d'oscillations de torsion (67) comprenant au moins un élément de transfert du côté de l'entraînement (65) et au moins un élément de transfert (68) du côté de la prise de force, pouvant être dévié par rapport au premier à l'encontre de l'action de l'accumulateur d'énergie (73) suivant un angle de rotation relative, les éléments de transfert (65, 68) présentant des logements (75) pour les accumulateurs d'énergie (73), dont chacun peut être supporté par le biais d'au moins un enroulement d'extrémité du côté périphérique (83) sur une limite respective du côté périphérique (83) des logements (75), et chaque enroulement d'extrémité (83) étant pourvu au moins sur son côté tourné vers la limite (83), d'un biseautage (93) qui, en commençant au niveau de la pointe libre de l'enroulement d'extrémité (87), s'étend sur une plage angulaire prédéterminée (ψ), un enroulement suivant (85) adjacent à l'enroulement d'extrémité (83) dans la direction périphérique étant seulement prévu dans la région d'étendue immédiate (89) de la pointe de l'enroulement d'extrémité (87) pour supporter cette dernière, en dehors de cette région d'étendue (89), par contre, pour former un espace actif d'extrémité de l'accumulateur d'énergie (100), une première distance spatiale (a) étant prévue en regard de l'enroulement d'extrémité (83), cette première distance spatiale (a) adoptant une valeur maximale dans une plage angulaire prédéterminée (ϕ) suivant la région d'étendue immédiate (89) de la pointe de l'enroulement d'extrémité (87), laquelle correspond, dans l'état non sollicité de l'accumulateur d'énergie (73), à une deuxième distance spatiale (b), qui est prévue dans la direction périphérique entre à chaque fois deux enroulements suivants (85) en tant qu'espace actif intermédiaire de l'accumulateur d'énergie (102), l'espace actif d'extrémité de l'accumulateur d'énergie (100), dans l'état non sollicité de l'accumulateur d'énergie (73), étant fixé dans une plage de rapport d'espace actif de 0,7 à 1,1 par rapport à l'espace actif intermédiaire de l'accumulateur d'énergie (102),
**caractérisé en ce que**
dans le cas d'un précintrage de l'accumulateur d'énergie (73) autour d'un axe de rotation (15), la pointe d'enroulement d'extrémité (87) est prévue au moins essentiellement radialement à l'intérieur d'un axe médian d'accumulateur d'énergie (92), tandis que la première distance spatiale (a) formant l'espace actif d'extrémité de l'accumulateur d'énergie (100) est prévue au moins essentiellement à l'extrémité radialement extérieure de chaque enroulement d'extrémité (83) et la deuxième distance spatiale (b) formant l'espace actif intermédiaire de l'accumulateur d'énergie (102) est prévue au moins essentiellement à l'extrémité radialement extérieure d'un enroulement suivant (85) adjacent à l'enroulement d'extrémité (83).
